# DEMANDE DE BREVET EUROPEEN

(11) **EP 3 396 291 A1**
(43) Date de publication de la demande: **31.10.2018**
(21) Numéro de dépôt: 18168418.4
(22) Date de dépôt: 20.04.2018
(51) Int. Cl.: F28D 20/02, B60H 1/00

(54) **MODULE THERMIQUE COMPRENANT UN BOITIER ET UN ECHANGEUR THERMIQUE**

(30) Priorité: 28.04.2017 FR 1753792
(71) Demandeur: Valeo Systemes Thermiques-THS, 78322 Le Mesnil Saint Denis Cedex (FR)
(72) Inventeur: ROBILLON, Lionel, 72210 LA SUZE SUR SARTHE (FR); BELLENFANT, Aurélie, 72210 LA SUZE SUR SARTHE (FR); TISON, Frédéric, 72210 LA SUZE SUR SARTHE (FR); JOVET, Bastien, 78322 LE MESNIL SAINT DENIS CEDEX (FR); MOREAU, Sylvain, 72210 LA SUZE SUR SARTHE (FR); GOUR, Josselin, 78322 LE MESNIL SAINT DENIS CEDEX (FR)
(74) Mandataire: Tran, Chi-Hai

(57) **Abrégé**

Module thermique (1) pour véhicule, comprenant un boîtier (2) et un échangeur thermique (3) destiné à être parcourus par un fluide réfrigérant, le boîtier (2) comprenant au moins deux grandes parois (21), deux petites parois (23) et une paroi de fond (26) qui délimitent un volume (V) du boîtier (2), l'échangeur thermique (3) comprenant une pluralité de tubes (30) répartis en au moins deux rangées de tubes (30) parallèles entre elles, chacune des rangées s'étendant selon une direction longitudinale (D) parallèle à au moins une des grandes parois (21) du boîtier (2), au moins l'une des rangées étant disposée dans le volume (V) du boîtier (2), un matériau à changement de phase étant contenu dans le volume (V) du boîtier (2) en contact direct avec au moins la rangée de l'échangeur thermique (3), ladite rangée étant au moins en partie immergée dans le matériau à changement de phase.

## Description

Le domaine de la présente invention est celui des installations de conditionnement d'air pour un véhicule, notamment automobile. L'invention relève plus spécifiquement des modules thermiques pouvant être associés à de telles installations.

Un véhicule est couramment équipé d'une installation de conditionnement d'air pour traiter thermiquement l'air présent ou envoyé dans l'habitacle du véhicule. Une telle installation comprend un circuit de fluide réfrigérant à l'intérieur duquel circule un fluide réfrigérant et qui fonctionne dans un mode pompe à chaleur. Successivement, suivant le sens de circulation du fluide réfrigérant à son travers, le circuit de fluide réfrigérant comprend essentiellement un compresseur, un condenseur, un détendeur et un évaporateur.

Dans le fonctionnement du circuit de fluide réfrigérant en mode pompe à chaleur, la température de l'habitacle est tempérée par la circulation du fluide réfrigérant entre le condenseur disposé dans le véhicule au voisinage de l'habitacle et l'évaporateur situé au contact de l'air extérieur du véhicule, plus précisément situé en face avant du véhicule.

Dans le fonctionnement en mode pompe à chaleur d'un tel circuit de fluide réfrigérant, le fluide réfrigérant absorbe de la chaleur au niveau de l'évaporateur et le fluide réfrigérant cède de la chaleur au niveau du condenseur. L'évaporateur est ainsi directement exposé à l'air extérieur au véhicule alors que le condenseur est traversé par un flux d'air envoyé vers l'habitacle du véhicule.

Dans un tel mode de fonctionnement, et tout particulièrement au démarrage du véhicule automobile, une forte puissance est nécessaire pour réchauffer l'air envoyé vers l'habitacle du véhicule, jusqu'à atteindre la température souhaitée par un passager du véhicule. Dans certaines conditions climatiques, cette augmentation de puissance a pour effet de générer un givrage de l'évaporateur, particulièrement lorsque la température de l'air extérieur traversant l'évaporateur est très faible, par exemple inférieure à 10°C, et l'humidité importante, entraînant ainsi une baisse importante du flux d'air traversant l'évaporateur du circuit de fluide réfrigérant. En l'absence de ce flux d'air, l'évaporateur ne fonctionne plus et le circuit de fluide réfrigérant opérant en mode pompe à chaleur n'est alors plus apte à fonctionner.

Par ailleurs, dans les véhicules automobiles électriques ou hybrides, particulièrement dans le cas où le compresseur du circuit de fluide réfrigérant est activé par un moteur électrique prévu à cet effet, cette demande de puissance impacte également directement l'autonomie du véhicule.

Une solution consiste à associer un module thermique à un tel circuit. En effet, un tel module thermique peut être disposé dans le circuit de fluide réfrigérant, de préférence en parallèle de l'évaporateur. Ce module thermique peut être alors configuré pour être parcouru par le même fluide réfrigérant que celui du circuit de fluide réfrigérant. Le module thermique est alors utilisé en phase de stockage de sorte à absorber des calories pour ensuite participer à l'augmentation de l'enthalpie du fluide réfrigérant le traversant, ceci au démarrage du véhicule automobile. Toutefois, de tels modules thermiques restent limités par leur fonctionnement et ne permettent pas d'atteindre rapidement la température de l'habitacle désirée par le passager.

De plus, de tels modules thermiques ne permettent pas de réduire de façon significative la puissance électrique consommée par le compresseur du circuit de fluide réfrigérant.

La présente invention vise ainsi à remédier à au moins l'un de ces inconvénients, en proposant un module thermique pour véhicule automobile qui permet de favoriser rapidement l'augmentation de l'enthalpie du fluide réfrigérant parcourant ce dernier tout en évitant un fonctionnement en pleine charge de l'évaporateur du circuit de fluide réfrigérant, lorsque ce circuit fonctionne en mode pompe à chaleur.

A cet effet, l'invention a pour objet un module thermique pour véhicule comprenant un boîtier et un échangeur thermique destiné à être parcourus par un fluide réfrigérant, le boîtier comprenant au moins deux grandes parois, deux petites parois et une paroi de fond qui délimitent un volume du boîtier, l'échangeur thermique comprenant une pluralité de tubes répartis en au moins deux rangées de tubes parallèles entre elles, chacune des rangées s'étendant selon une direction longitudinale parallèle à au moins une des grandes parois du boîtier, au moins l'une des rangées étant disposée dans le volume du boîtier, un matériau à changement de phase étant contenu dans le volume du boîtier en contact direct avec au moins la rangée de l'échangeur thermique, ladite rangée étant au moins en partie immergée dans le matériau à changement de phase.

On entend par l'expression «contact direct », un contact physique entre un premier élément et un deuxième élément.

D'autre part, on comprendra le terme « immergé(s) » comme n'étant pas limité à un élément liquide. Ainsi, selon l'invention, le terme « immergé(s) » peut faire référence à un élément solide. Par exemple, dans le cas où le matériau à changement de phase est formé par des micro-billes, la ou les rangée(s) de tubes peuvent être au moins en partie immergée(s) dans les micro-billes.

Grâce à ces caractéristiques, il est possible de concevoir un module thermique pouvant stocker et/ou restituer une quantité de calories rapidement. En effet, dans une utilisation d'un circuit de fluide réfrigérant pour véhicule automobile fonctionnant en mode pompe à chaleur et comprenant un tel module thermique, le matériau à changement de phase est configuré pour emmagasiner ou délivrer des calories. En particulier, le temps nécessaire pour le matériau à changement de phase pour céder ces calories à l'échangeur thermique est accéléré.

Lorsque le circuit de fluide réfrigérant est utilisé dans un mode pompe à chaleur, on comprendra que l'installation de conditionnement d'air du véhicule est utilisée en tant que chauffage avec pour objectif principal d'augmenter la température de l'habitacle du véhicule.

Avantageusement, chaque rangée est disposée dans le volume du boîtier.

Avantageusement, les rangées de tubes sont immergées dans le matériau à changement de phase.

Avantageusement, les tubes des rangées sont noyés dans le matériau à changement de phase.

Grâce à cette caractéristique, il est possible d'augmenter la surface de contact de l'échangeur thermique du module thermique en contact direct avec le matériau à changement de phase.

Avantageusement, l'échangeur thermique est un échangeur à circulation en « U ». On entend par échangeur à circulation en « U », un échangeur thermique dont le sens de circulation du fluide réfrigérant traversant ces tubes parcourt une forme en U.

Selon une variante de l'invention, les deux rangées de tubes sont réparties en une première rangée de tubes reliée fluidiquement à un collecteur d'entrée de l'échangeur thermique et en une deuxième rangée de tubes reliée fluidiquement à un collecteur de sortie de l'échangeur thermique.

Selon une autre variante de l'invention, les tubes d'une même rangée comprennent chacun deux grandes faces et deux petites faces, les grandes faces étant majoritairement parallèles à au moins une des grandes parois du boîtier.

Avantageusement, la première rangée et la deuxième rangée sont symétriques l'une par rapport à l'autre par rapport à un plan parallèle à au moins une des grandes faces du boîtier. Ce plan partage en deux le module thermique dans son épaisseur.

Cette dernière caractéristique permet de faciliter la fabrication de l'échangeur thermique du module thermique.

Selon un autre mode particulier de l'invention, le collecteur d'entrée est disposé, suivant un premier axe, perpendiculairement à une direction générale d'extension des tubes de la première rangée et le collecteur de sortie est disposé, suivant un deuxième axe, perpendiculairement à une direction générale d'extension des tubes de la deuxième rangée.

Selon un autre mode particulier de l'invention, au moins un tube d'au moins une des rangées présente une portion plane et une portion coudée, la portion plane étant reliée fluidiquement à la portion coudée. On comprend ici que la portion plane ou coudée est un secteur du tube configuré pour être emprunté par le fluide réfrigérant. La portion coudée est ainsi dans le prolongement de la portion plane.

Avantageusement, la portion plane est parallèle à au moins une des grandes parois du boîtier.

Avantageusement, la portion plane d'un tube de la première rangée et la portion plane d'un tube de deuxième rangée sont en regard l'une de l'autre.

Grâce à cette caractéristique, il est possible de délimiter, entre au moins un tube d'une première rangée et au moins un tube d'une deuxième rangée, un passage permettant une insertion aisée entre ces tubes d'éléments composant le module thermique, notamment un élément chauffant électrique.

Avantageusement, la portion plane est successive à la portion coudée.

Selon un mode particulier de l'invention, la portion coudée du tube présente une extrémité logée dans l'un des collecteurs. Une telle extrémité débouche ainsi dans un volume délimité par le collecteur concerné. De cette façon, les collecteurs d'entrée et de sortie peuvent être écartés l'un de l'autre dans une direction perpendiculaire à la direction longitudinale, de sorte à favoriser l'insertion aisée de composant additionnel entre ces tubes, par exemple un élément chauffant électrique.

Avantageusement, au moins un tube de chaque rangée présente une portion plane et une portion coudée, la portion coudée d'un tube d'une première rangée étant orientée dans un sens opposé à un sens d'orientation de la portion coudée d'un tube de la deuxième rangée.

On comprendra ainsi que les portions planes d'un tube de la première rangée en regard d'un tube de la deuxième rangée sont disposées l'une en face de l'autre, alors que leurs portions coudées respectives s'écartent l'une de l'autre, en formant un évasement qui se resserre vers l'espace qui sépare les portions planes concernées. Cette configuration génère un écartement des collecteurs d'entrée et de sortie l'un de l'autre, pour faciliter l'insertion de composant formant le module thermique, par exemple un élément chauffant électrique.

Selon un mode de réalisation de l'invention, au moins un axe d'un des collecteurs est décalé par rapport à un plan dans lequel s'étend la portion plane du tube de la rangée reliée fluidiquement au collecteur.

Avantageusement, au moins un élément chauffant électrique est disposé entre un tube de la première rangée et un tube de la deuxième rangée.

Grâce à cet élément chauffant électrique, il est possible de disposer d'une source de chaleur favorisant l'augmentation rapide de la quantité de calories emmagasinée par le module thermique.

Dans une application particulière aux véhicules hybrides ou électriques, il est possible de profiter du moment du cycle de recharge des batteries électriques d'un tel véhicule, généralement effectuée durant la nuit, pour alimenter électriquement l'élément chauffant électrique contenu dans le module thermique. Lors d'une telle recharge, l'élément chauffant électrique charge en calories le matériau à changement de phase contenu dans le boîtier du module thermique. Le matériau à changement de phase peut alors emmagasiner une grande quantité de calories. Le module thermique fonctionne alors en phase de stockage de calories.

Ultérieurement, lors du démarrage d'un tel véhicule, c'est-à-dire après le cycle de recharge du véhicule, l'élément chauffant électrique n'est plus alimenté électriquement. Le module thermique chargé en calories libère alors les calories emmagasinées. Les calories disponibles sont ainsi échangées avec les tubes de l'échangeur thermique contenu dans le module thermique. Lorsque le circuit de fluide réfrigérant est utilisé en mode pompe à chaleur, particulièrement au démarrage d'un tel véhicule, le module thermique vient suppléer l'évaporateur, le fluide réfrigérant parcourant alors l'échangeur thermique du module thermique. Les calories échangées entre le matériau à changement de phase et les tubes favorisent ainsi l'augmentation de l'enthalpie du fluide réfrigérant traversant ces tubes. Le module thermique fonctionne alors en phase de déstockage de calories. Ainsi, cette configuration a pour effet de limiter ou d'empêcher le givrage de l'évaporateur du circuit de fluide réfrigérant, tout en favorisant l'augmentation de la température de l'habitacle du véhicule.

On comprendra que dans ce mode de réalisation, il est possible d'optimiser le nombre d'éléments électriques utilisés, tout en assurant une efficacité de fonctionnement du module thermique.

Avantageusement, un élément chauffant électrique est disposé entre chaque paire de tubes formée par un tube de la première rangée en regard d'un tube de la deuxième rangée. L'élément chauffant électrique peut alors être maintenu mécaniquement entre un tube de la première rangée et un tube de la deuxième rangée en regard l'une de l'autre.

Selon une autre variante de réalisation de l'invention, l'élément chauffant électrique comprend deux grandes surfaces et deux petites surfaces, les grandes surfaces étant parallèles à au moins une des grandes faces du tube correspondant.

Cette configuration a pour effet de favoriser l'absorption des calories par le matériau à changement de phase contenu dans le module thermique lorsque l'élément chauffant électrique est électriquement alimenté, c'est-à-dire, lorsque ce dernier est utilisé en phase de stockage de calories. Dans cette utilisation, l'échangeur thermique participe à la dissipation des calories émises par l'élément chauffant électrique dans le matériau à changement de phase.

Avantageusement, les grandes surfaces de l'élément chauffant électrique sont parallèles à au moins une portion plane du tube auquel l'élément chauffant électrique est associé.

Avantageusement, l'élément chauffant électrique est en contact direct avec la portion plane de chaque tube entre lesquels il est disposé. Cette configuration de l'élément chauffant électrique permet un bon échange thermique avec le fluide réfrigérant.

Avantageusement, l'élément chauffant électrique comprend un corps, ledit corps comprenant un élément résistif électrique.

Avantageusement, l'élément chauffant électrique comprend au moins une pierre à coefficient de température positif, dit effet CTP.

L'élément chauffant électrique est par exemple un ensemble formé par au moins une pierre CTP, généralement de forme rectangulaire et plate, comprise entre deux électrodes, soit une anode et une cathode, l'ensemble étant enveloppé dans une matière isolante électriquement depuis laquelle émerge des connecteurs électriques configurés pour alimenter électriquement la pierre CTP, la pierre CTP étant constituée d'un matériau conducteur de courant capable de limiter le courant électrique le traversant selon la température de ce matériau.

Avantageusement, l'élément résistif électrique est un fil résistif.

Avantageusement, l'élément résistif électrique est un film résistif sérigraphié.

On comprendra par l'expression «film résistif », un maillage de fils électriquement conducteurs porté par une couche souple électriquement isolante.

Selon une particularité de l'invention, le matériau à changement de phase est en contact direct avec l'élément chauffant électrique.

Grâce à cette caractéristique, il est possible d'utiliser l'élément chauffant électrique pour transmettre, par un contact thermique direct, une grande partie des calories créées par ce dernier et diffusées au matériau à changement de phase, ceci pendant le cycle de recharge du véhicule.

Selon une variante de l'invention, l'échangeur thermique comprend une boîte de renvoi reliant fluidiquement les tubes de la première rangée aux tubes de la deuxième rangée.

Selon une autre variante de l'invention, la boîte de renvoi comprend une paroi interposée entre un premier conduit et un deuxième conduit de la boîte de renvoi et dans laquelle est formée au moins une ouverture reliant fluidiquement le premier conduit au deuxième conduit.

Avantageusement, la paroi de la boîte de renvoi est une paroi plane formant un méplat de sorte que le premier conduit et le deuxième conduit peuvent être aboutés l'un contre l'autre.

Selon une autre variante de l'invention, la boîte de renvoi est formée par un premier conduit et un deuxième conduit distants l'un de l'autre et reliés fluidiquement entre eux par l'intermédiaire d'au moins une portion de conduit.

Selon un mode de réalisation de l'invention, les tubes sont des tubes multicanaux.

Selon un autre mode de réalisation de l'invention, au moins un tube d'une rangée est extrudé.

De façon particulière, tous les tubes d'une rangée sont extrudés.

Selon un mode particulier de l'invention, au moins un élément de dissipation de chaleur est disposé entre deux tubes d'une même rangée, lesdits deux tubes étant à côté l'un par rapport à l'autre. On comprendra que les deux tubes sont côte à côte. Grâce à cette caractéristique, il est possible d'augmenter la surface d'échange de calories entre le matériau à changement de phase et le fluide réfrigérant par l'intermédiaire des tubes, lorsque le module thermique est utilisé en phase de déstockage, c'est-à-dire au démarrage du véhicule.

On comprendra alors que l'élément chauffant électrique et/ou l'élément de dissipation de chaleur peuvent être alors au moins en partie immergé(s) dans le matériau à changement de phase.

En variante, lorsque les rangées de tubes sont immergées dans le matériau à changement de phase, l'élément chauffant électrique et/ou l'élément de dissipation de chaleur peuvent être alors immergé(s) dans le matériau à changement de phase.

Avantageusement, l'élément de dissipation de chaleur est disposé entre deux éléments chauffants électriques.

Avantageusement, l'élément de dissipation de chaleur s'étend majoritairement perpendiculairement à la direction longitudinale.

Avantageusement, l'élément de dissipation de chaleur comprend deux grands pans et deux petits pans, les grands pans s'étendant d'une grande paroi du boîtier à l'autre grande paroi du boîtier. Un élément de dissipation de chaleur peut être une ailette ou un drain thermique. Selon un mode de réalisation de l'invention, le matériau à changement de phase est en contact direct avec l'élément de dissipation de chaleur. Grâce à cette caractéristique, lorsque le module thermique est utilisé en phase de déstockage, il est possible pour le matériau à changement de phase d'échanger de façon plus homogène avec le fluide réfrigérant les calories emmagasinées, ceci par l'intermédiaire de l'élément de dissipation de chaleur.

Selon un autre mode de réalisation de l'invention, l'élément chauffant électrique comprend des connecteurs électriques qui sortent du boîtier.

Avantageusement, les connecteurs électriques sortent du boîtier du côté du boîtier opposé à la paroi de fond du boîtier. Grâce à cette caractéristique, il est possible de disposer les éléments chauffants électriques sans modifier la configuration de l'échangeur thermique, particulièrement lorsque cet échangeur thermique est un échangeur à circulation en U. On comprend ici que les connecteurs électriques sont disposés sans interférer mécaniquement avec l'échangeur thermique. C'est la raison pour laquelle ils débouchent du module thermique du côté des collecteurs.

On comprendra que pour un échangeur à circulation en U, Le collecteur d'entrée et de sortie forment les extrémités du U alors que la boîte de renvoi forme la base du U. Le ou les éléments chauffant électrique(s) est(sont) disposés dans l'échangeur, plus particulièrement du côté des collecteurs.

Selon une réalisation de l'invention, le boîtier comprend un couvercle formant une partie de fermeture du boîtier et au travers duquel émergent les connecteurs électriques de l'élément chauffant électrique.

Grâce à cette caractéristique, il est possible d'utiliser le couvercle du boîtier pour maintenir l'échangeur thermique et le matériau à changement de phase dans le volume du boîtier. De plus, le couvercle a pour fonction de contenir les calories dans le module thermique.

Avantageusement, le boîtier est enveloppé d'une couche isolante thermiquement.

Avantageusement, le boîtier est configuré pour contenir dans son volume, de manière étanche, le matériau à changement de phase.

Avantageusement, le boîtier est réalisé en matière plastique, notamment synthétique. Encore plus avantageusement, le boîtier est en aluminium.

Avantageusement, le collecteur d'entrée comprend une entrée et le collecteur de sortie comprend une sortie, l'entrée et la sortie émergeant du boîtier depuis une des petites parois de ce dernier. Grâce à cette caractéristique, il est possible de faciliter le raccordement du module au circuit de fluide réfrigérant.

Avantageusement, l'entrée du collecteur d'entrée et la sortie du collecteur de sortie sont côte à côte.

Avantageusement, le matériau à changement de phase est un liquide. Alternativement, le matériau à changement de phase est formé par des micro-billes. On comprendra que le matériau à changement de phase peut être liquide au-delà de sa température de fusion.

Selon une série de caractéristiques, prises seules ou en combinaison, propres au matériau à changement de phase utilisé avantageusement dans le module thermique selon l'invention, on pourra prévoir que :
- le matériau à changement de phase peut comporter un matériau comprenant des composés inorganiques, tels qu'un alliage de sels organiques et d'eau ;
- le matériau à changement de phase peut comporter un matériau comprenant des composés organiques, tels que les paraffines et les acides gras ;
- le matériau à changement de phase peut comporter un matériau comprenant des composés eutectiques ;
- le matériau à changement de phase peut comporter un matériau comprenant des composés d'origine végétale ;
- le matériau à changement de phase est intégré dans le module thermique sous forme d'un matériau composite polymérisé, notamment sous forme de feuille ;
- la température de changement de phase dudit matériau à changement de phase est comprise entre 10°C et 40°C ;
- la température optimale de changement de phase du matériau à changement de phase est de 15°C.

Ces caractéristiques listées du matériau à changement de phase peuvent avantageusement être combinées ensemble de sorte que le matériau à changement de phase peut contenir plusieurs éléments.

Selon un autre aspect, l'invention vise un circuit de fluide réfrigérant comprenant au moins un compresseur, un premier échangeur thermique agencé pour être disposé dans un habitacle d'un véhicule, un détendeur, un deuxième échangeur thermique agencé pour être disposé en face avant du véhicule et un module thermique selon l'une quelconque des caractéristiques précédentes, parcourus par un fluide réfrigérant. Il est ainsi possible d'utiliser le module thermique afin d'éviter un phénomène de givrage du deuxième échangeur thermique lorsque celui-ci fonctionne en évaporateur tout en permettant une montée suffisante en température du fluide réfrigérant. On comprendra que l'on cherche à augmenter la puissance de chauffe à très basse température.

Avantageusement, le module thermique est disposé dans une portion basse pression du circuit de fluide réfrigérant.

Avantageusement, le module thermique est disposé dans une portion basse pression du circuit de fluide réfrigérant en série entre le détendeur et le compresseur. Grâce à cette caractéristique, il est possible particulièrement d'augmenter l'enthalpie du fluide réfrigérant avant son passage dans le deuxième échangeur thermique, et donc de dégivrer celui-ci.

Selon un autre mode de réalisation du circuit de fluide réfrigérant de l'invention, le module thermique est disposé dans une portion basse pression du circuit de fluide réfrigérant en parallèle du deuxième échangeur thermique.

Selon un autre aspect, l'invention concerne un véhicule comprenant un circuit de fluide réfrigérant selon l'invention.

D'autres caractéristiques, détails et avantages de l'invention ressortiront plus clairement à la lecture de la description donnée ci-après à titre indicatif en relation avec des dessins dans lesquels :
- la figure 1 est une illustration schématique d'un circuit de fluide réfrigérant d'un véhicule dans un fonctionnement correspondant à celui d'une pompe à chaleur et dans lequel on a représenté une configuration possible du module thermique selon l'invention ;
- la figure 2 est une illustration en perspective du module thermique selon l'invention dans laquelle on a représenté le boîtier contenant les rangées de tubes de l'échangeur thermique, le boîtier étant recouvert d'un couvercle de fermeture représenté ici séparé du reste du module thermique ;
- la figure 3 est une illustration en coupe et en perspective du module thermique selon l'invention ;
- la figure 4 est une illustration en perspective du boîtier du module thermique selon l'invention et de son couvercle ;
- la figure 5 est une illustration en coupe de l'échangeur thermique du module thermique ;
- la figure 6A est une illustration d'un deuxième mode de réalisation de la boîte de renvoi de la figure 5 :
- la figure 6B est une illustration d'un troisième mode de réalisation de la boîte de renvoi de la figure 5 ;
- la figure 7 est une illustration en perspective d'une section d'un tube des rangées de tubes de l'échangeur thermique.

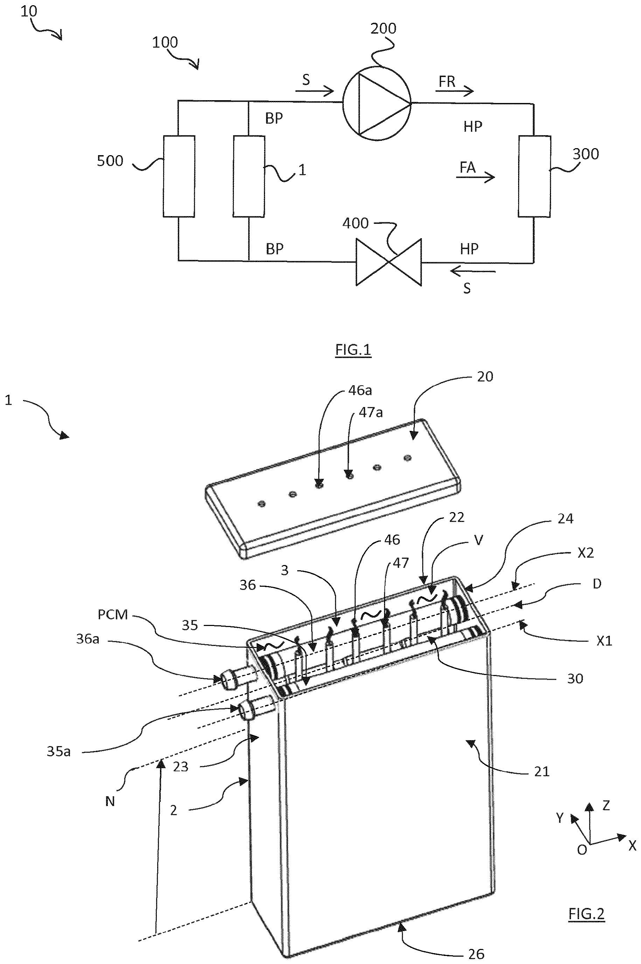

Sur la figure 1, une installation 10 de conditionnement d'air pour un habitacle de véhicule, notamment automobile, comprend un circuit de fluide réfrigérant 100 à l'intérieur duquel circule un fluide réfrigérant FR dans un sens de circulation S. Sur l'exemple de réalisation illustré, le circuit de fluide réfrigérant 100 comprend essentiellement, successivement en série et suivant un même sens de circulation S du fluide réfrigérant FR, un compresseur 200, un condenseur 300 ou refroidisseur de gaz, un détendeur 400 et au moins un évaporateur 500.

On comprendra que dans la description de l'invention, on s'intéresse particulièrement à un mode de fonctionnement d'un tel circuit de fluide réfrigérant 100 correspondant à un fonctionnement en mode pompe à chaleur, ce fonctionnement étant associé à une utilisation de l'installation 10 de conditionnement d'air en tant que chauffage, ceci principalement afin d'augmenter la température de l'habitacle du véhicule.

On notera également que l'exemple illustré d'une architecture minimale du circuit de fluide réfrigérant 100 est donné à titre indicatif et n'est pas restrictif quant à la portée de l'invention au regard de diverses architectures possibles du circuit de fluide réfrigérant 100.

On va maintenant décrire le cycle de fonctionnement d'un tel circuit de fluide réfrigérant 100 utilisé en mode pompe à chaleur lorsqu'il ne comprend pas un module thermique 1 selon l'invention.

Le compresseur 200 du circuit de fluide réfrigérant 100 a pour fonction d'augmenter la pression du fluide réfrigérant FR. En entrée du compresseur 200, le fluide réfrigérant FR est dans une phase gazeuse basse pression. En sortie du compresseur 200, le fluide réfrigérant FR est dans une phase gazeuse haute pression. Le fluide réfrigérant FR en phase gazeuse haute pression est ensuite condensé par le condenseur 300. Cette condensation est principalement réalisée par un échange thermique réalisé par les parois du condenseur 300 entre le fluide réfrigérant FR circulant dans le condenseur 300 et un flux d'air FA traversant le condenseur 300 et envoyé vers l'habitacle du véhicule. La condensation permet ainsi d'augmenter la température du flux d'air FA. L'habitacle du véhicule est alors réchauffé par ce flux d'air FA. Le condenseur 300 réalise alors un changement de phase du fluide réfrigérant FR, d'une phase gazeuse vers une phase liquide, en vue d'alimenter une entrée du détendeur 400. La circulation du fluide réfrigérant FR entre la sortie du compresseur 200 et l'entrée du détendeur 400 correspond à une portion haute pression HP du circuit de fluide réfrigérant 100. Le détendeur 400 permet d'abaisser la pression du fluide réfrigérant FR pour fournir en sortie un fluide réfrigérant FR dans une phase liquide basse pression et destiné à alimenter l'évaporateur 500. L'évaporateur 500 permet alors l'évaporation du fluide réfrigérant FR. Cette évaporation est principalement réalisée par un échange thermique réalisé par les parois de l'évaporateur 500 entre le fluide réfrigérant FR circulant dans l'évaporateur 500 et un flux d'air extérieur à l'habitacle traversant l'évaporateur 500. L'évaporateur 500 réalise alors un changement de phase du fluide réfrigérant FR d'une phase liquide vers une phase gazeuse, avant d'atteindre l'entrée du compresseur 200. La circulation du fluide réfrigérant FR entre la sortie du détendeur 400 et l'entrée du compresseur 200 correspond à une portion basse pression BP du circuit de fluide réfrigérant 100. La portion basse pression BP et la portion haute pression HP forment ensemble le circuit de fluide réfrigérant 100.

Le module thermique 1 selon l'invention est destiné à équiper un tel circuit de fluide réfrigérant 100. Un tel module thermique 1 peut être disposé dans la portion basse pression BP du circuit de fluide réfrigérant 100 de fluide réfrigérant FR. Selon une configuration préférée, le module thermique 1 peut être disposé en parallèle de l'évaporateur 500 de la portion basse pression BP.

Dans cette dernière configuration, au démarrage du véhicule, le module thermique 1 permet d'échanger des calories avec le fluide réfrigérant FR, ce qui permet avantageusement d'élever l'enthalpie du fluide FR circulant de la portion basse pression BP du circuit de fluide réfrigérant 100.

On utilise ici les calories stockées préalablement dans le module thermique 1 pour réchauffer le fluide réfrigérant FR et le maintenir dans des conditions adéquates au réchauffement du flux d'air FA amené à traverser le condenseur 300 pour alimenter l'habitacle.

En outre, au démarrage du véhicule, notamment dans des conditions de grand froid favorable au givrage de l'évaporateur, lorsque le module thermique 1 est chargé, le fluide réfrigérant FR est amené à passer par le module thermique 1 plutôt que par l'évaporateur 500, ce qui évite un givrage sur les parois de l'évaporateur 500 qui tend à boucher le passage d'air et donc réduire son efficacité.

Tel que cela a été précisé précédemment, le module thermique 1 est monté en parallèle de l'évaporateur 500 sur le circuit de fluide réfrigérant. On pourra notamment prévoir de réaliser cette mise en parallèle du module thermique 1 par l'intermédiaire d'au moins une vanne pilotée pour contrôler le débit de fluide réfrigérant FR passant par le module thermique 1.

Dans une autre configuration, le module thermique 1 peut être disposé dans la portion basse pression BP en série avec l'évaporateur 500. Encore plus avantageusement, le module thermique 1 peut être disposé dans la portion basse pression BP en série entre le détendeur 400 et l'évaporateur 500.

Selon l'invention, le module thermique 1 comprend un matériau à changement de phase. Le matériau à changement de phase peut être choisi de manière à présenter une transition solide-liquide. Lorsque le matériau à changement de phase atteint sa température de changement de phase, après avoir été chauffé ou refroidi, il emmagasine ou restitue des calories relativement à son environnement proche. Le matériau à changement de phase est présent dans un boîtier 2 du module thermique 1 dans un état liquide, ou sous forme de billes, par exemple.

On pourra introduire le matériau à changement de phase dans le boîtier du module thermique 1 aussi bien sous forme liquide, que sous forme solide, et notamment dans ce dernier cas sous forme d'un matériau composite polymérisé, par exemple sous forme de feuille.

La plage de températures de changement de phase d'un tel matériau peut notamment être de l'ordre de 10°C à 40°C, et il est intéressant dans le mode d'application ici décrit de prévoir une température de changement de phase proche de 15°C.

On comprend que cette température de changement de phase peut varier d'une application à l'autre sans sortir du contexte de l'invention, et que la valeur de 15°C n'est ici donnée qu'à titre d'exemple. Il convient de noter que le matériau à changement de phase peut être en outre caractérisé par la vitesse d'absorption et de restitution des calories, notamment pour choisir un matériau susceptible d'offrir une grande réactivité aux variations de température du fluide réfrigérant FR, qui peut être amené à varier fréquemment en fonction des besoins de gestion thermique du véhicule.

Lorsqu'un véhicule électrique ou hybride équipé d'un tel module thermique 1 est rechargé en courant électrique, il est avantageux de profiter de la recharge du véhicule pour alimenter électriquement un ou plusieurs élément(s) chauffant(s) électrique(s) contenu(s) dans le module thermique 1. Lors d'une telle recharge, le ou les élément(s) chauffant(s) électrique(s) charge(nt) en calories le matériau à changement de phase contenu dans le boîtier du module thermique 1. Le matériau à changement de phase peut alors emmagasiner une grande quantité de calories.

Ce fonctionnement permet de stocker progressivement, à l'aide du matériau à changement de phase, les calories dissipées par le ou les élément(s) électrique(s). On comprendra que le module thermique 1 est utilisé en phase de stockage de calories.

Une fois le matériau à changement de phase chargé en calories, et lors du démarrage du véhicule, le module thermique 1 libère les calories emmagasinées dans le module thermique 1. Ces calories sont alors absorbées par le fluide réfrigérant FR par l'intermédiaire d'un échangeur thermique contenu dans le module thermique 1.

Ce fonctionnement permet de déstocker les calories du matériau à changement de phase tout en réduisant la consommation électrique du compresseur électrique qui équipe le circuit de fluide réfrigérant 100 et/ou d'augmenter la puissance de chauffage de l'installation 10 de conditionnement d'air. Le compresseur 200 consomme moins d'énergie électrique car le fluide réfrigérant FR possède une température plus élevée grâce à la restitution des calories opérée par le module thermique 1.

Une fois le module thermique 1 déchargé, le fluide FR peut être orienté, à l'aide d'une vanne de régulation, vers l'évaporateur 500, de sorte que l'on retrouve un mode de fonctionnement classique, c'est-à-dire correspondant au fonctionnement du circuit de fluide réfrigérant 100 sans le module thermique 1. Le fluide réfrigérant FR échange thermiquement avec l'air passant à travers l'évaporateur 500 avant d'être dirigé vers le compresseur 200.

On comprendra que l'utilisation du module thermique 1 permet ainsi de retarder ou limiter l'utilisation de l'évaporateur 500. Lorsque ce module est en phase de déstockage, la puissance absorbée en face avant pour fournir de l'énergie au fluide réfrigérant FR est diminuée, de sorte que l'on limite le risque de givrage par une diminution de la condensation sur les parois de l'évaporateur 500.

On comprend à la lecture de ce qui précède que l'invention permet, notamment lorsque le véhicule électrique ou hybride est en cycle de recharge électrique, de stocker des calories dans un module thermique 1, afin de pouvoir utiliser ultérieurement ces calories stockées, notamment au démarrage du véhicule et lorsque la température est très basse, par exemple inférieure à -10°C. Cette utilisation a principalement pour intérêt d'éviter d'utiliser l'évaporateur 500 pouvant givrer dans de telles conditions tout en augmentant la puissance de chauffage de l'installation.

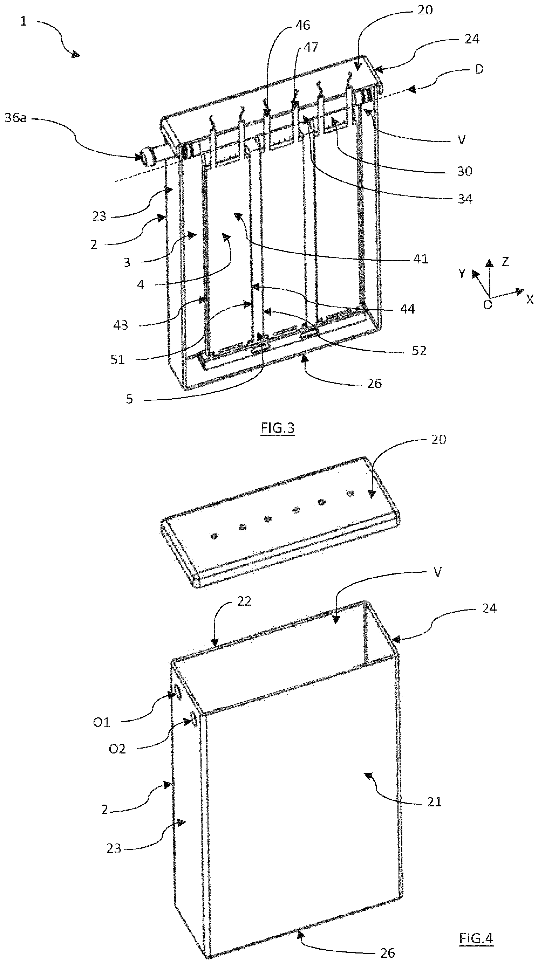

Tel qu'illustré aux figures 2 et 3, on a représenté le module thermique 1 selon l'invention équipé d'un boîtier 2 dans un repère orthonormé OXYZ. Le boîtier 2 est formé par deux grandes parois 21, 22, deux petites parois 23, 24 et une paroi de fond 26 qui délimitent ensemble un volume V. Les deux grandes parois 21, 22 sont parallèles et en regard l'une de l'autre et les deux petites parois 23, 24 sont parallèles et en regard l'une de l'autre. Les deux grandes parois 21, 22 et les deux petites parois 23, 24 bordent la paroi de fond 26.

Le boîtier 2 est fermé par un couvercle 20 de fermeture. L'échangeur thermique 3 est contenu dans le boîtier 2 ainsi formé. L'échangeur thermique 3 comprend une pluralité de tubes 30 répartis en deux rangées de tubes 30. Ces rangées sont logées dans le volume V du boîtier 2 parallèlement entre elles de sorte que chaque rangée s'étend selon une direction longitudinale D parallèle à au moins une des grandes parois 21, 22 du boîtier 2.

Avantageusement, le matériau à changement de phase occupe approximativement 90 pourcent du volume V du boîtier 2. Ce pourcentage de remplissage du boîtier 2 permet d'éviter les risques de gonflement du boîtier 2 lors des changements de phase du matériau à changement de phase. On a illustré à la figure 2, un niveau N de remplissage correspondant schématiquement au niveau de remplissage du matériau à changement de phase pour occuper 90 pourcent du volume V du boîtier 2. Tel qu'illustré à la figure 2, les rangées de tubes 30 de l'échangeur thermique 3 dépassent au-dessus du niveau N de remplissage. Lorsque les rangées de tubes 30 sont immergées dans le matériau à changement de phase, on comprendra que le boîtier 2 illustré dans le mode de réalisation des figures 2 à 4 peut être dimensionné pour respecter cette dernière caractéristique de remplissage tout en permettant que les rangées de tubes soient immergées dans le matériau à changement de phase.

Une première rangée est reliée fluidiquement à un collecteur d'entrée 35 et une deuxième rangée est reliée fluidiquement à un collecteur de sortie 36 de l'échangeur thermique 3. Le collecteur d'entrée 35 est disposé, suivant un premier axe X1, perpendiculairement à une direction générale d'extension des tubes 30 de la première rangée et le collecteur de sortie 36 est disposé, suivant un deuxième axe X2, perpendiculairement à une direction générale d'extension des tubes 30 de la deuxième rangée. Une entrée 35a du collecteur d'entrée 35 et une sortie 36a du collecteur de sortie 36 sont configurées pour émerger du boîtier 2 du module thermique 1 via des ouvertures formées dans le boîtier 2, ces ouvertures étant ménagées dans une des petites parois 23, 24 du boîtier 2. De préférence, le boîtier 2 est rendu étanche par ses ouvertures par un dispositif d'étanchéité disposé sur le contour de ses ouvertures et au contact de l'entrée 35a et/ou de la sortie 36a. On notera également que l'entrée 35a du collecteur d'entrée 35 et la sortie 36a du collecteur de sortie 36 s'étendent toutes deux dans un même plan OXY.

Tels que représentés sur les figures 2 ou 3, les tubes 30 des rangées sont destinés à être parcourus par un fluide réfrigérant. Le volume V du boîtier 2 est de plus destiné à contenir un matériau à changement de phase PCM représenté schématiquement. Pour assurer une fonction de stockage de calories, le matériau à changement de phase PCM est en contact direct avec les tubes 30 des rangées de l'échangeur thermique 3. Une telle disposition peut être réalisée en noyant l'échangeur thermique 3 dans le matériau à changement de phase PCM contenu dans le volume V.

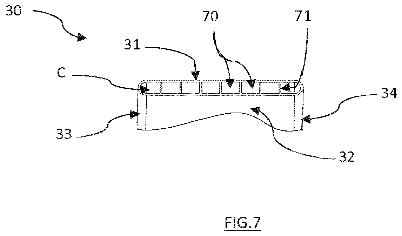

Tel qu'illustré à la figure 7, chaque tube 30 comprend deux grandes faces 31, 32 et deux petites faces 33, 34 qui délimitent ensemble une cavité C. Les grandes faces 31, 32 formant chaque tube 30 s'étendent chacune majoritairement parallèlement aux grandes parois 21, 22 du boîtier 2. De tels tubes 30 peuvent être des tubes multicanaux, tels que décrits ultérieurement. De tels tubes peuvent être obtenus en pliant une bobine de matière.

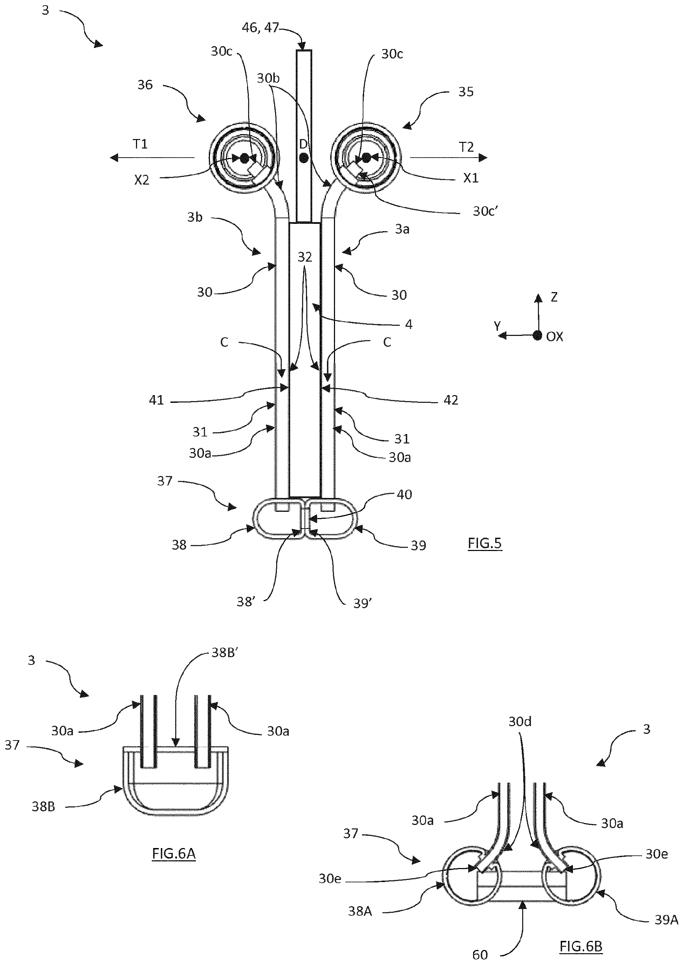

En se référant aux figures 3 et 5, un élément chauffant électrique 4 est disposé entre un tube 30 de la première rangée 3a et un tube 30 de la deuxième rangée 3b. Plus particulièrement, un élément chauffant électrique 4 est disposé entre chaque paire de tubes 30 formée par un tube 30 de la première rangée 3a en regard d'un tube 30 de la deuxième rangée 3b. Encore plus particulièrement, on notera que l'élément chauffant électriques 4 comprend deux grandes surfaces 41, 42 et deux petites surfaces 43, 44, les grandes surfaces 41, 42 étant parallèles à au moins une des grandes faces 31, 32 du tube 30 correspondant. Dans cette configuration, l'élément chauffant électrique 4 est en contact direct avec la portion plane 30a de chaque tube 30 entre lesquels il est disposé.

Comme visible à la figure 5, les éléments chauffants électriques 4 comprennent chacun des connecteurs électriques 46, 47 s'étendant vers l'extérieur au-delà du boîtier 2 pour traverser le couvercle 20 par des orifices 46a, 47a prévus à cet effet. On notera que ces connecteurs électriques 46, 47 sortent du boîtier 2 du côté opposé à la paroi de fond 26 de ce dernier.

Le couvercle 20 de fermeture a principalement pour fonction d'assurer la protection du contenant du boîtier 2. De plus, le couvercle 20 de fermeture peut être configuré pour assurer une fonction d'étanchéité du boîtier 2 de sorte à contenir le matériau à changement de phase PCM dans le volume V du boîtier 2 et empêcher l'insertion de corps étrangers dans le volume V du boîtier 2. Le boîtier 2 du module thermique 1 peut alors permettre de contenir dans son volume V, de manière étanche, le matériau à changement de phase PCM. Les connecteurs électriques 46, 47 des éléments chauffants électriques 4 peuvent alors être reliés électriquement à au moins un module de commande.

Les éléments chauffants électriques 4 sont dimensionnés de sorte que leur épaisseur soit égale à la distance séparant les tubes 30 d'une paire de tubes 30 telle que définie précédemment. Grâce à cette caractéristique, il est possible lors du montage d'un tel échangeur thermique 3 de maintenir mécaniquement les éléments chauffants électriques 4 entre les paires de tubes 30, par une force de pincement générée par les deux tubes 30 en regard l'un de l'autre. De façon avantageuse, la configuration des rangées 3a, 3b permet d'écarter les rangées 3a, 3b l'une de l'autre de sorte à pouvoir insérer les éléments chauffants électriques 4.

La figure 3 illustre des éléments de dissipation de chaleur 5 disposés entre deux tubes 30, à côté l'un par rapport à l'autre, d'une même rangée. On notera que cette disposition permet de positionner un élément de dissipation de chaleur 5 entre deux éléments chauffants électriques 4 de sorte que chaque élément de dissipation de chaleur 5 s'étend majoritairement perpendiculairement à la direction longitudinale D. Plus particulièrement, l'élément de dissipation de chaleur 5 comprend deux grands pans 51, 52 et deux petits pans, les grands pans 51, 52 s'étendant d'une grande paroi 21 du boîtier à l'autre grande paroi 22 du boîtier 2. Selon l'exemple illustré ici, l'élément de dissipation de chaleur 5 s'étend d'une rangée à l'autre, en passant entre deux tubes 30 de la première rangée 3a et entre deux tubes 30 de la deuxième rangée 3b.

De façon illustrée, les éléments chauffants électriques 4 et les éléments de dissipation de chaleur 5 sont disposés dans le boîtier 2 du module thermique 1 pour être en contact direct avec le matériau à changement de phase PCM.

Toutefois, l'invention n'est pas limitée à cette configuration et le module thermique 1 peut ne pas contenir d'éléments de dissipation de chaleur 5 et/ou d'éléments chauffants électriques 4. Dans le cas où l'invention ne comprendrait pas d'éléments chauffants électriques 4, le couvercle 20 du boîtier 2 ne comprendrait pas d'orifices 46a, 47a, tels que décrits.

Sur la figure 4, on a représenté le boîtier 2 du module thermique sans l'échangeur thermique. Le boîtier 2 de forme rectangulaire délimite par l'intérieur de ses parois 21, 22, 23, 24, 26 le volume V du boîtier 2. Le boîtier 2 est ouvert par l'une de ses faces opposées à la paroi de fond 26. Les grandes parois 21, 22 permettent de définir entre elles une largeur du boîtier 2. Les petites parois 23, 24 permettent de définir entre elles une longueur du boîtier 2. L'une des petites parois 23 du boîtier 2 comprend les deux ouvertures O1, 02 disposées l'une à côté de l'autre. Ces ouvertures O1, 02 sont par ailleurs situées à proximité du couvercle 20 du boîtier 2 et sont destinées à recevoir l'entrée du collecteur d'entrée et la sortie du collecteur de sortie pour émerger vers l'extérieur du boîtier 2, tel que décrit précédemment.

En variante de l'invention, le boîtier 2 peut être entouré d'une couche isolante thermiquement. Cette couche isolante permet d'éviter une dissipation des calories emmagasinées dans le module thermique vers l'extérieur de son boîtier 2.

Tel qu'illustré à la figure 5, on a représenté l'échangeur thermique 3 du module thermique 1 formé par les deux rangées 3a, 3b de tubes 30. Ces deux rangées 3a, 3b sont symétriques l'une à l'autre par rapport à un plan OXZ parallèle à au moins une des grandes parois 21, 22 du boîtier 2, passant par la direction longitudinale D et passant entre les deux rangées 3a, 3b.

Les tubes 30 de chaque rangée 3a, 3b présentent une portion plane 30a et au moins une ou plusieurs portions coudées 30b, 30d, la portion plane 30a étant reliée fluidiquement à la portion coudée 30b. La portion coudée 30b est successive à la portion plane 30a pour former ensemble le tube 30. La portion plane 30a d'un tube 30 de la première rangée 3a et la portion plane 30a d'un tube 30 de la deuxième rangée 3b sont en regard l'un de l'autre, et parallèles l'une à l'autre. En référence à la figure 3 et 5, on notera que la portion plane 30a est parallèle à au moins une des grandes parois 21, 22 du boîtier 2.

La portion coudée 30b des tubes 30 de chaque rangée 3a, 3b présente une extrémité 30c logée dans le collecteur 35, 36 relié fluidiquement à sa rangée 3a, 3b respective. Une bague de soudage 30c' est disposée à cette extrémité 30c pour assurer le maintien du tube 30 dans le collecteur 35, 36. Le tube 30 peut également être solidarisé par brasage au collecteur 35, 36. On notera que la portion coudée 30b d'un tube 30 d'une rangée 3a est orientée dans un sens T1 opposée à un sens T2 d'orientation de la portion coudée 30b d'un tube 30 de l'autre rangée 3b. Dans cette configuration, on comprendra alors que le premier axe X1 et le deuxième axe X2, respectivement du collecteur d'entrée 35 et du collecteur de sortie 36, sont décalés par rapport à un plan OXZ dans lequel s'étendent les portions planes 30a des tubes de la rangée 3a, 3b reliée fluidiquement à son collecteur 35, 36 correspondant. On notera que les grandes surfaces 41, 42 de l'élément chauffant électrique 4 sont parallèles aux portions planes 30a des tubes 30, telles qu'illustrées à la figure 5 particulièrement.

En référence aux figures 3 et 5, on notera que les éléments chauffants électriques 4 s'étendent parallèlement à la portion plane 30a des tubes 30 de la paire de tubes 30 auquel il est associé. Plus précisément, les éléments chauffants électriques 4 sont en contact avec la portion plane 30a de chaque tube 30 entre lesquelles il est disposé.

Tel qu'illustré à la figure 5, on a représenté une boîte de renvoi 37 reliant fluidiquement les tubes 30 de la première rangées 3a aux tubes 30 de la deuxième rangée 3b. Dans un premier mode de réalisation, la boîte de renvoi 37 est formée par deux conduits 38, 39 de section ovalisée et comprenant respectivement une paroi plane 38', 39' en forme de méplat, de sorte que les conduits 38, 39 peuvent être aboutés l'un contre l'autre. Plus précisément, les deux conduits 38, 39 sont en appui l'un contre l'autre par leur paroi plane 38', 39' respective. Des ouvertures 40 sont formées dans ces parois planes 38', 39' pour relier fluidiquement les tubes 30 de la première rangée 3a aux tubes 30 de la deuxième rangée 3b. Les conduits 38, 39 de la boîte de renvoi 37 sont configurés pour loger l'extrémité des portions planes 30a des tubes 30 de chaque rangée 3a, 3b. Un tel échangeur thermique 3 formé par les rangées 3a, 3b, les collecteur 35, 36 et la boîte de renvoi 37 peut être obtenu par brasage. Un tel brasage permet de former un ensemble étanche.

La figure 6A illustre un deuxième mode de réalisation de la boîte de renvoi 37 de la figure 5. Dans ce mode de réalisation, la boîte de renvoi 37 est formée d'un seul conduit 38B de section ovalisée et comprenant un méplat 38B' configuré pour être traversé par l'extrémité des portions planes 30a des tubes 30 de chaque rangée 3a, 3b. Chacune de ces extrémités débouche dans une chambre commune délimitée par le conduit 38B et son méplat 38B'.

La figure 6B illustre un troisième mode de réalisation de la boîte de renvoi 37 de la figure 5. Dans ce mode de réalisation, la boîte de renvoi 37 est formée de deux conduits 38A, 39A distants l'un de l'autre. Les tubes 30 des rangées 3a, 3b comprennent chacun une autre portion coudée 30d identique à la portion coudée 30b terminée par l'extrémité 30c logée dans les collecteurs 35, 36. Ces autres portions coudées 30d sont configurées pour être logées par leurs extrémités 30e dans les conduits 38A, 39A de la boîte de renvoi 37. Dans ce mode de réalisation, ces deux conduits 38A, 39A sont reliés fluidiquement par une ou des portions de canal 60 dont les extrémités débouchent dans les conduits 38A, 39A de la boîte de renvoi 37.

On notera que dans ce troisième mode de réalisation, les conduits 38A, 39A formant la boîte de renvoi 37 sont identiques aux conduits formant les collecteurs d'entrée 35 et de sortie 36. Cette configuration présente l'avantage de pouvoir réduire les coûts de fabrication de l'échangeur thermique 3 en standardisant la fabrication et la logistique attachées à ces collecteurs, notamment en mutualisant les moyens de production.

La figure 7 illustre un mode de réalisation d'un tube 30 équipant la première rangée et/ou la deuxième rangée. Une section d'un tube 30 formant les rangées 3a, 3b de tube 30 de l'échangeur thermique 3 comprend une pluralité de canaux 70 formée le long du tube 30. Le tube 30 peut être extrudé pour former les canaux 70 peuvent être extrudés. Les canaux 70 sont délimités les uns des autres par des plaques 71 reliant une grande face 31 du tube 30 à l'autre grande face 32 du tube 30. Chacun des canaux 70 relie fluidiquement les collecteurs d'entrée et de sortie 35, 36 à la boîte de renvoi 37. On comprendra que dans cette configuration, la portion plane 30a et la portion coudée 30b formant le tube 30 comprennent chacune ces canaux 70.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associés les uns avec les autres selon diverses combinaisons dans la mesure où ils ne sont pas incompatibles ou exclusifs les uns des autres. En particulier toutes les variantes et modes de réalisation décrits précédemment sont combinables entre eux.

## Revendications

1. Module thermique (1) pour véhicule, comprenant un boîtier (2) et un échangeur thermique (3) destiné à être parcourus par un fluide réfrigérant (FR), le boîtier (2) comprenant au moins deux grandes parois (21, 22), deux petites parois (24, 23) et une paroi de fond (26) qui délimitent un volume (V) du boîtier (2), l'échangeur thermique (3) comprenant une pluralité de tubes (30) répartis en au moins deux rangées (3a, 3b) de tubes (30) parallèles entre elles, chacune des rangées (3a, 3b) s'étendant selon une direction longitudinale (D) parallèle à au moins une des grandes parois (21, 22) du boîtier (2), au moins l'une des rangées (3a, 3b) étant disposée dans le volume (V) du boîtier (2), un matériau à changement de phase (PCM) étant contenu dans le volume (V) du boîtier (2) en contact direct avec au moins la rangée (3a, 3b) de l'échangeur thermique (3), ladite rangée (3a, 3b) étant au moins en partie immergée dans le matériau à changement de phase (PCM).

2. Module thermique (1) selon la revendication précédente, dans lequel les deux rangées (3a, 3b) de tubes (30) sont réparties en une première rangée (3a) de tubes (30) reliée fluidiquement à un collecteur d'entrée (35) de l'échangeur thermique (3) et en une deuxième rangée (3b) de tubes (30) reliée fluidiquement à un collecteur de sortie (36) de l'échangeur thermique (3).

3. Module thermique (1) selon la revendication précédente, dans lequel le collecteur d'entrée (35) est disposé, suivant un premier axe (X1), perpendiculairement à une direction générale d'extension des tubes (30) de la première rangée (3a) de tubes (30) et le collecteur de sortie (36) est disposé, suivant un deuxième axe (X2), perpendiculairement à une direction générale d'extension des tubes (30) de la deuxième rangée (3b) de tubes (30).

4. Module thermique (1) selon l'une quelconque des revendications précédentes, dans lequel au moins un tube (30) d'au moins une des rangées (3a, 3b) de tubes (30) présente une portion plane (30a) et une portion coudée (30b), la portion plane (30a) étant reliée fluidiquement à la portion coudée (30b).

5. Module thermique (1) selon la revendication précédente prise en combinaison avec l'une quelconque des revendications 2 ou 3, dans lequel la portion coudée (30b) du tube (30) présente une extrémité (30c) logée dans l'un des collecteurs (35, 36).

6. Module thermique (1) selon l'une quelconque des revendications 4 ou 5 prise en combinaison avec l'une quelconque des revendications 2 ou 3, dans lequel au moins un axe (X1, X2) d'un des collecteurs (35, 36) est décalé par rapport à un plan (P1, P2) dans lequel s'étend la portion plane (30a) du tube (30) de la rangée (3a, 3b) reliée fluidiquement au collecteur (35, 36).

7. Module thermique (1) selon l'une quelconque des revendications précédentes prise en combinaison avec la revendication 2, dans lequel au moins un élément chauffant électrique (4) est disposé entre un tube (30) de la première rangée (3a) et un tube (30) de la deuxième rangée (3b).

8. Module thermique (1) selon la revendication précédente, dans lequel l'élément chauffant électrique (4) comprend des connecteurs électriques (46, 47) qui sortent du boîtier (2).

9. Module thermique (1) selon l'une quelconque des revendications précédentes, dans lequel au moins un élément de dissipation de chaleur (5) est disposé entre deux tubes (30) d'une même rangée (3a, 3b), lesdits deux tubes (30) étant à côté l'un par rapport à l'autre.

10. Circuit (100) de fluide réfrigérant (FR) comprenant au moins un compresseur (200), un premier échangeur thermique (300) agencé pour être disposé dans un habitacle d'un véhicule, un détendeur (400), un deuxième échangeur thermique (500) agencé pour être disposé en face avant du véhicule et un module thermique (1) selon l'une quelconque des revendications précédentes, parcourus par un fluide réfrigérant (FR).
